# EUROPÄISCHE PATENTANMELDUNG

(11) **EP 4 350 953 A1**
(43) Veröffentlichungstag der Anmeldung: **10.04.2024**
(21) Anmeldenummer: 23000124.0
(22) Anmeldetag: 15.09.2023
(51) Int. Cl.: H02K 1/32, H02K 17/16, H02K 3/24, H02K 9/19, H02K 15/00

(54) **ROTOR EINER ELEKTRISCHEN ASYNCHRONMASCHINE UND VERFAHREN ZU DESSEN HERSTELLUNG**

(30) Priorität: 05.10.2022 DE 102022003680
(71) Anmelder: Wieland-Werke AG, 89079 Ulm (DE)
(72) Erfinder: Thumm, Gerhard, 89155 Erbach (DE); Voggeser, Volker, 89250 Senden (DE); Walliser, Jochen, 89079 Ulm (DE); Wolf, Michael, 89077 Ulm (DE)

(57) **Zusammenfassung**

Die Erfindung betrifft einen Rotor (1) einer elektrischen Asynchronmaschine mit einer Welle (11), einem Läuferblechpaket (2) und Kurzschlussringen (301, 302), die an den Stirnseiten (21, 22) des Läuferblechpakets (2) angebracht sind. Die Welle (11) weist eine in Radialrichtung außen liegende Mantelfläche (14), einen Hohlraum (12), der sich innerhalb der Welle (11) in Achsrichtung erstreckt, mindestens eine Durchtrittsstelle (13), die sich auf der Mantelfläche (14) der Welle (11) befindet, und mindestens einen Kanal (15) auf, der den Hohlraum (12) mit der Durchtrittsstelle (13) verbindet. Das Läuferblechpaket (2) weist mindestens einen Kanal (23, 24) auf, der sich innerhalb des Läuferblechpakets (2) von der ersten Stirnseite (21) des Läuferblechpakets zur zweiten Stirnseite (22) erstreckt. Mindestens einer der Kurzschlussringe (301, 302) ist aus mindestens zwei zu einem Scheibenpaket (32) miteinander verbundenen, kreisringförmigen Scheiben (31) zusammengesetzt. Mindestens eine Scheibe (31) mindestens eines Kurzschlussrings (301) weist Ausnehmungen (41, 42, 43) auf, die so angeordnet sind, dass in dem Kurzschlussring (301) eine Kanalstruktur (4) gebildet ist, welche in fluidleitender Verbindung mit mindestens einem Kanal (23, 24) des Läuferblechpakets (2) steht und welche die mindestens eine Durchtrittsstelle (13) auf der Mantelfläche (14) der Welle (11) mit mindestens einem Kanal (23, 24) des Läuferblechpakets (2) fluidleitend verbindet.

Die Erfindung umfasst ferner ein Verfahren zur Herstellung eines solchen Rotors.

## Beschreibung

Die Erfindung betrifft einen Rotor einer elektrischen Asynchronmaschine sowie ein Verfahren zu dessen Herstellung.

Ein solcher Rotor umfasst eine Welle, mindestens ein Läuferblechpaket, das eine Vielzahl von Aussparungen aufweist, und mindestens einen Läuferkäfig. Der Läuferkäfig besteht aus elektrisch leitenden Läuferstäben, die in die Aussparungen des Läuferblechpakets so eingebracht sind, dass die Läuferstäbe an ihren beiden Endbereichen einen Überstand über das Läuferblechpaket aufweisen, und aus stirnseitig an das Läuferblechpaket angebrachten Kurzschlussringen mit einer Vielzahl im Bereich ihres äußeren Umfangs angeordneter Ausnehmungen, in die die Endbereiche der Läuferstäbe hineinragen.

Bei elektrischen Asynchronmaschinen entstehen durch Wirbelstromverluste im Läuferblechpaket des Rotors hohe Temperaturen. Dies macht insbesondere bei Hochleistungsmaschinen eine zusätzliche Kühlung durch ein Kühlfluid, üblicherweise Öl, erforderlich. Das Kühlfluid wird durch die Rotorwelle zugeführt und dann über zusätzliche Endplatten aufgenommen, welche stirnseitig am Läuferblechpaket angebracht sind. Über Bohrungen, die in diese Endplatten eingebracht sind, wird das Kühlfluid in das Läuferblechpaket in dort vorgesehene Kanäle oder Nuten geleitet. Das Kühlfluid strömt dann parallel zur Rotorachse durch das Läuferblechpaket und wird anschließend aus dem Rotor abgeleitet. Hierbei ist nachteilhaft, dass Bohrungen in die Endplatten eingebracht werden müssen. Dies erfordert einen zusätzlichen Aufwand und somit Kosten.

Der Erfindung liegt die Aufgabe zugrunde, einen Rotor einer elektrischen Asynchronmaschine, der diese Nachteile beseitigt, sowie ein Verfahren zu dessen Herstellung anzugeben.

Die Erfindung wird bezüglich eines Rotors durch die Merkmale des Anspruchs 1 und bezüglich eines Verfahrens zur Herstellung eines solchen Rotors durch die Merkmale des Anspruchs 11 wiedergegeben. Die weiteren rückbezogenen Ansprüche betreffen vorteilhafte Aus- und Weiterbildungen der Erfindung.

Die Erfindung betrifft einen Rotor einer elektrischen Asynchronmaschine. Der Rotor umfasst eine Welle, durch die eine Achsrichtung, eine Radialrichtung und eine Umfangrichtung definiert werden. Die Welle weist eine in Radialrichtung außen liegende Mantelfläche, einen Hohlraum, der sich innerhalb der Welle in Achsrichtung erstreckt, mindestens eine Durchtrittsstelle, die sich auf der Mantelfläche der Welle befindet, und mindestens einen Kanal auf, der den Hohlraum mit der mindestens einen Durchtrittsstelle verbindet. Mit anderen Worten, der Kanal ist also so angeordnet ist, dass ein Fluid vom Hohlraum durch den Kanal zu der mindestens einen Durchtrittsstelle strömen kann. Ferner umfasst der Rotor ein Läuferblechpaket mit einer ersten Stirnseite und einer in Achsrichtung hierzu entgegengesetzten, zweiten Stirnseite, wobei das Läuferblechpaket mindestens einen Kanal aufweist, der sich innerhalb des Läuferblechpakets von der ersten Stirnseite zur zweiten Stirnseite erstreckt. An den Stirnseiten des Läuferblechpakets sind Kurzschlussringe angebracht, wobei mindestens einer der Kurzschlussringe aus mindestens zwei zu einem Scheibenpaket miteinander verbundenen Scheiben zusammengesetzt ist. Jede Scheibe weist zwei kreisringförmige Oberflächen auf. Einander zugewandte Oberflächen benachbarter Scheiben berühren sich flächig. Gemäß der Erfindung weist mindestens eine Scheibe mindestens eines Kurzschlussrings Ausnehmungen auf, die so angeordnet sind, dass in dem Kurzschlussring eine Kanalstruktur gebildet ist, welche in fluidleitender Verbindung mit mindestens einem Kanal des Läuferblechpakets steht und welche die mindestens eine Durchtrittsstelle auf der Mantelfläche der Welle mit mindestens einem Kanal des Läuferblechpakets fluidleitend verbindet.

Die Erfindung geht dabei von der Überlegung aus, dass an den Stirnseiten des Läuferblechpakets Kurzschlussringe vorhanden sind, um die im Läuferblechpaket eingebrachten Läuferstäbe elektrisch untereinander zu verbinden. Mindestens einer der Kurzschlussringe ist dabei aus mindestens zwei kreisringförmigen Scheiben aufgebaut, indem die Scheiben flächig zusammengesetzt und gefügt sind, so dass ein Scheibenpaket gebildet ist. Derartige Kurzschlussringe sind beispielsweise aus der Druckschrift DE 10 2017 010 685 A1 bekannt. Bei der Herstellung der einzelnen Scheiben können diese ohne großen zusätzlichen Aufwand mit Ausnehmung versehen werden. Die Ausnehmungen sind so in mindestens eine der Scheiben eingearbeitet, dass nach dem Zusammensetzen und Fügen der einzelnen Scheiben durch die Ausnehmungen im Kurzschlussring eine Kanalstruktur gebildet ist, die so ausgebildet ist, dass ein Fluid, das im Hohlraum innerhalb der Rotorwelle strömt, durch die Kanalstruktur dem Läuferblechpaket zugeführt werden kann. Hierzu steht die Kanalstruktur in fluidleitender Verbindung mit mindestens einem Kanal des Läuferblechpakets einerseits und andererseits am Innendurchmesser des Kurzschlussrings mit der Durchtrittsstelle auf der Mantelfläche der Welle. Die Kanalstruktur, mittels derer ein Fluid von der Rotorwelle auf einen oder mehrere Kanäle im Läuferblechpaket verteilt oder aus einem oder mehreren dieser Kanäle aufgenommen werden kann, ist somit in mindestens einem der Kurzschlussringe integriert.

Der besondere Vorteil besteht darin, dass die zusätzlich benötigten Endplatten mit den eigens darin eingebrachten Bohrungen entfallen können. Das Einbringen der Ausnehmungen in mindestens eine der Scheiben eines Kurzschlussrings kann sehr kostengünstig durch Prägen oder Stanzen unmittelbar bei der Herstellung der einzelnen Scheiben erfolgen. Ferner können die aus Scheiben aufgebauten Kurzschlussringe die Funktion von Wuchtscheiben übernehmen.

Die Kurzschlussringe sind üblicherweise aus Kupfer oder einer Kupferlegierung hergestellt. Aufgrund der guten Wärmeleitfähigkeit von Kupfer und Kupferlegierungen tragen bei dem vorgeschlagenen Rotor auch die von Fluid durchströmten Kurzschlussringe zur Gesamtkühlung des Rotors bei.

Die Kanäle im Läuferblechpaket können von den Läuferstäben räumlich getrennt angeordnet sein. Alternativ können sie auch mit den Aussparungen, in die die Läuferstäbe eingebracht sind, eine Einheit bilden.

In bevorzugter Ausgestaltung der Erfindung kann jeder Kurzschlussring aus mindestens zwei zu einem Scheibenpaket miteinander verbundenen Scheiben zusammengesetzt sein und mindestens eine Scheibe jedes Kurzschlussrings Ausnehmungen aufweisen, die so angeordnet sind, dass in den Kurzschlussringen jeweils eine Kanalstruktur gebildet ist, welche in fluidleitender Verbindung mit mindestens einem Kanal des Läuferblechpakets steht. Die vorstehend beschriebenen Vorteile ergeben sich nun für beide Kurzschlussringe.

Das Einbringen der Ausnehmungen in mindestens eine der Scheiben beider Kurzschlussringe ermöglicht ferner eine sehr flexible Gestaltung der Kanalstruktur und somit der Strömungsführung des Fluids im Läuferblechpaket. Beispielsweise kann vorgesehen sein, dass das Fluid auf einer Stirnseite in einen oder mehrere Kanäle in das Läuferblechpaket eintritt und am anderen Ende durch die Kanalstruktur des sich dort befindenden Kurzschlussrings gesammelt wird und dann den Rotor verlässt. Es ist aber auch möglich, dass die Kanalstruktur in einem der Kurzschlussringe so ausgebildet ist, dass das aus einer ersten Vielzahl von Kanälen aus dem Läuferblechpaket strömende Fluid im Kurzschlussring um 180° umgelenkt wird und durch eine zweite Vielzahl von Kanälen nochmals durch das Läuferblechpaket strömt.

Bei einer Ausführungsform der Erfindung kann mindestens eine Scheibe eines Kurzschlussrings auf einer ihrer Oberflächen mindestens eine Ausnehmung in Form einer nut- oder rillenartigen Vertiefung aufweisen, durch die im Verbund mit einer weiteren Scheibe ein Kanal gebildet ist, der zumindest einen Teil der Kanalstruktur darstellt. Eine solche Vertiefung kann besonders einfach durch Prägen in die Oberfläche einer Scheibe eingebracht werden. Durch eine derartige Vertiefung ist es möglich, ein Fluid in Radialrichtung und/oder in Umfangsrichtung zu leiten.

Im Rahmen einer speziellen Ausgestaltung dieser Ausführungsform können nut- oder rillenartige Vertiefungen benachbarter Scheiben so gebildet sein, dass sie sich zu einem Kanal ergänzen. Hierdurch ist es möglich, Kanäle mit besonders großer Querschnittsfläche zu bilden. Die Breite eines solchen Kanals kann in Achsrichtung größer als die Dicke einer einzelnen Scheibe sein.

Bei einer weiteren Ausführungsform der Erfindung kann die Kanalstruktur mindestens eines Kurzschlussrings mindestens eine erste Ausnehmung umfassen, die sich in Radialrichtung erstreckt, und mindestens eine zweite Ausnehmung umfassen, die sich in Achsrichtung erstreckt. Bei einer derartigen Ausbildung der Kanalstruktur kann das Fluid in Radialrichtung von der Welle des Rotors weggeführt und dann in Achsrichtung dem Läuferblechpaket zugeführt werden.

Im Rahmen einer speziellen Ausgestaltung dieser weiteren Ausführungsform kann sich die in Achsrichtung erstreckende, zweite Ausnehmung durch eine Bohrungen in mindestens einer Scheibe eines Kurzschlussrings gebildet sein.

Darüber hinaus ist es vorteilhaft, dass die Kanalstruktur mindestens eines Kurzschlussrings mindestens eine dritte Ausnehmungen umfasst, die sich in Umfangsrichtung erstreckt. Hierdurch ist es möglich, das Fluid zur Kühlung des Läuferblechpakets auf mehrere Kanäle, die im Läuferblechpaket auf unterschiedlichen Positionen in Umfangsrichtung angeordnet sind, zu verteilen.

In weiterer vorteilhafter Ausgestaltung der Erfindung können erste Ausnehmungen mindestens eines Kurzschlussrings Strömungsquerschnitte aufweisen, die innerhalb des Kurzschlussrings unterschiedlich sind und/oder zweite Ausnehmungen mindestens eines Kurzschlussrings Strömungsquerschnitte aufweisen, die innerhalb des Kurzschlussrings unterschiedlich sind und/oder dritte Ausnehmungen mindestens eines Kurzschlussrings Strömungsquerschnitte aufweisen, die innerhalb des Kurzschlussrings unterschiedlich sind. Auf diese Weise kann der Druckabfall bei Strömung des Fluids beeinflusst werden und somit die Verteilung des Fluids auf die Kanäle im Läuferblechpaket gesteuert werden.

Im Rahmen weiteren speziellen Ausführungsform der Erfindung kann die Kanalstruktur mindestens eines Kurzschlussrings mindestens eine Ausnehmung umfassen, die als flächige Vertiefung gebildet ist und die sich sowohl in Radialrichtung als auch in Umfangsrichtung erstreckt, und ferner mindestens zweite Ausnehmungen umfassen, die sich in Achsrichtung erstrecken. Eine flächige Vertiefung ermöglicht eine hinsichtlich Druckabfall besonders günstige Verteilung des Fluids auf mehrere Kanäle, die im Läuferblechpaket auf unterschiedlichen Positionen in Umfangsrichtung angeordnet sind. Insbesondere ist es vorteilhaft, dass flächige Vertiefungen benachbarter Scheiben so gebildet sind, dass sie sich zu einem Raum für die Strömung des Fluids ergänzen. Hierdurch ist es möglich, eine Raum mit besonders großer Querschnittsfläche für die Strömung des Fluids zu bilden.

Im Rahmen einer speziellen Ausführungsform der Erfindung kann das Läuferblechpaket mindestens einen ersten Kanal und mindestens einen zweiten Kanal aufweisen und die Kanalstruktur in einem der Kurzschussringe so ausgebildet sein, dass ein Fluid, welches vom ersten Kanal des Läuferblechpakets in die Kanalstruktur des Kurzschlussrings strömt, dort zumindest bezogen auf die Achsrichtung umgelenkt und in den zweiten Kanal des Läuferblechpakets geführt wird. Diese Strömungsführung ist analog zu einer Zwei-Pass-Führung bei einem Wärmetauscher und ermöglicht eine gleichmäßige Kühlung des Läuferblechpakets.

Hinsichtlich weiterer technischer Merkmale und Vorteile des erfindungsgemäßen Rotors wird hiermit explizit auf die nachstehenden Erläuterungen im Zusammenhang mit dem erfindungsgemäßen Verfahren zur Herstellung eines solchen Rotors sowie auf die Zeichnungen und Ausführungsbeispiele verwiesen.

Ein weiterer Aspekt der Erfindung betrifft ein Verfahren zur Herstellung eines Rotors wie vorstehend beschrieben, wobei das Verfahren folgende Schritte umfasst:
a) Bereitstellen mindestens einer Scheibe mit zwei kreisringförmigen Oberflächen,
b) Einbringen von Ausnehmungen in mindestens eine der Oberflächen der Scheibe für die Bildung einer Kanalstruktur,
c) Montieren der Scheibe zusammen mit mindestens einer weiteren Scheibe zu einem Scheibenpaket,
d) Anordnen des Scheibenpakets auf der Welle des Rotors an einer Stirnseite des Läuferblechpakets,
e) Herstellen einer Fügeverbindung zwischen benachbarten Scheiben eines Scheibenpakets zur Bildung eines Kurzschlussrings.

Die in Verfahrensschritt a) bereitgestellte Scheibe besteht üblicherweise aus Kupfer oder einer Kupferlegierung. Alternativ ist es auch möglich, dass sie aus Aluminium oder einer Aluminiumlegierung besteht. In Verfahrensschritt a) kann die Scheibe beispielsweise aus einem Band oder einem Blech gestanzt werden. Das Einbringen von Ausnehmungen in mindestens eine der Oberflächen der Scheibe in Verfahrensschritt b) kann vorteilhafterweise mit Verfahrensschritt a) kombiniert werden, indem beide Schritte zu einem Schritt zusammengefasst werden, also gleichzeitig und mit einem einzigen Werkzeug durchgeführt werden. Alternativ kann Verfahrensschritt b) auch unmittelbar nach Verfahrensschritt a) durchgeführt werden. Beide Varianten haben den Vorteil, dass das Einbringen der Ausnehmungen sehr eng mit der Bereitstellung der Scheibe verknüpft ist und somit keinen signifikanten Mehraufwand erfordert. Auch bei der alternativen Verfahrensvariante, bei der Schritt b) unmittelbar nach Schritt a) erfolgt, ist die Scheibe bereits vereinzelt und muss nicht eigens positioniert werden. Ferner können in Verfahrensschritt b) vorteilhafterweise weitere Strukturelemente in die Scheibe eingebracht werden. Beispielsweise können die Aussparungen für die Enden der Läuferstäbe eingebracht werden. Verfahrensschritt b) kann optional auch auf eine oder mehrere weitere Scheiben angewendet werden, die in Verfahrensschritt c) zu einem Scheibenpaket montiert werden. Die Verfahrensschritte c) bis e) können wie aus der Druckschrift DE 10 2017 010 685 A1 bekannt durchgeführt werden.

Die mit der Erfindung erzielten Vorteile bestehen insbesondere darin, dass das Einbringen der Ausnehmungen für die Bildung der Kanalstruktur in einem Kurzschlussring ohne signifikanten Mehraufwand erfolgt.

In vorteilhafter Ausgestaltung der Erfindung kann das Einbringen der Ausnehmungen in Schritt b) durch Fräsen, Prägen, Stanzen und/oder Bohren erfolgen.

Hinsichtlich weiterer technischer Merkmale und Vorteile des erfindungsgemäßen Verfahrens wird hiermit explizit auf die Erläuterungen im Zusammenhang mit der erfindungsgemäßen Rotor sowie auf die Zeichnungen und Ausführungsbeispiele verwiesen.

Ausführungsbeispiele der Erfindung werden anhand der schematischen Zeichnungen näher erläutert.

Darin zeigen:
Fig. 1 einen Querschnitt eines Rotors,
Fig. 2 einen Querschnitt eines weiteren Rotors,
Fig. 3 eine Scheibe eines Kurzschlussrings,
Fig. 4 eine alternative Ausführungsform einer Scheibe eines Kurzschlussrings,
Fig. 5 eine weitere Ausführungsform einer Scheibe eines Kurzschlussrings,
Fig. 6 eine Scheibe eines Kurzschlussrings mit Umlenkungen.

Einander entsprechende Teile sind in allen Figuren mit denselben Bezugszeichen versehen.

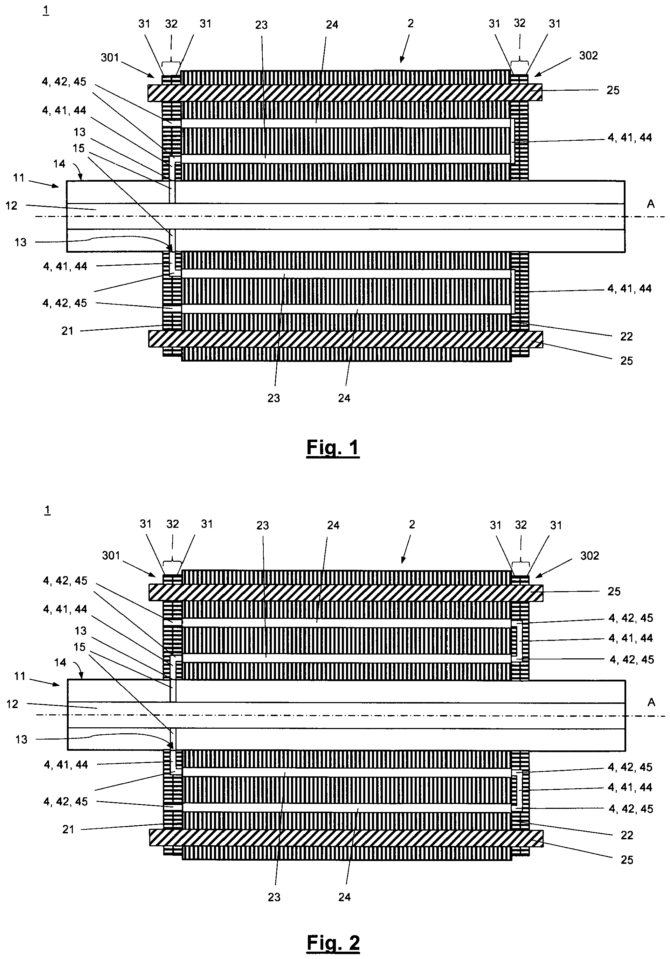

Fig. 1 zeigt einen Querschnitt eines Rotors 1. Der Rotor 1 umfasst eine Welle 11 mit einer Achse A. Die Welle 11 ist ein im Wesentlichen rotationssymmetrischer Körper, durch den eine Achsrichtung, eine Radialrichtung und eine Umfangsrichtung definiert werden. Aus Gründen der Übersichtlichkeit ist die Welle 11 als zylindrischer Körper dargestellt. Die in Radialrichtung äußere Oberfläche der Welle wird als Mantelfläche 14 bezeichnet. Die Welle 11 kann insbesondere auf ihrer Mantelfläche 14 nicht dargestellte Absätze, Gewinde und weitere Merkmale oder Elemente aufweisen. Im Inneren der Welle 11 befindet sich ein Hohlraum 12, der sich entlang der Achse A erstreckt. Ferner weist die Welle 11 Kanäle 15 auf, die sich in Radialrichtung erstrecken und durch die der Hohlraum 12 mit Durchtrittsstellen 13 auf der Mantelfläche 14 verbunden ist. In Fig. 1 sind exemplarisch zwei dieser Kanäle 15 dargestellt.

Die Welle 11 ist an ihrer Mantelfläche 14 mit einem Läuferblechpaket 2 verbunden. Das Läuferblechpaket 2 weist mehrere Kanäle 23, 24 auf, die sich im Wesentlichen in Achsrichtung durch das gesamte Läuferblechpaket 2 hindurch erstrecken. Dabei liegen erste Kanäle 23 radial weiter innen, während zweite Kanäle 24 radial weiter außen liegen. Im radial außen liegenden Bereich des Läuferblechpakets 2 befinden sich Läuferstäbe 25, die sich in an sich bekannter Weise im Wesentlichen in Achsrichtung durch das Läuferblechpaket 2 erstrecken. Die Läuferstäbe 25 können einen Drall aufweisen. Die Läuferstäbe 25 weisen an beiden Stirnseiten 21, 22 des Läuferblechpakets 2 jeweils einen Überstand über das Läuferblechpaket 2 auf. Im Bereich des Überstands sind die Läuferstäbe 25 mit Kurzschlussringen 301, 302 mechanisch und elektrisch leitend verbunden, beispielsweise durch Löten oder Schweißen. Die Kurzschlussringe 301, 302 sind als Scheibenpakete 32 aufgebaut. Dabei sind jeweils zwei Scheiben 31 flächig miteinander verbunden und zu einem Scheibenpaket 32 zusammengefügt. Es ist auch möglich, dass ein Kurzschlussring 301, 302 aus mehr als zwei Scheiben 31 aufgebaut ist. Der Innendurchmesser der Kurzschlussringe 301, 302 ist gleich dem Außendurchmesser der Welle 11, so dass die Kurzschlussringe 301, 302 mit der Mantelfläche 14 der Welle 11 in Kontakt stehen.

Im Kurzschlussring 301, der in Fig. 1 an der linken Stirnseite 21 des Läuferblechpakets 2 dargestellt ist, sind in die Scheiben 31 Ausnehmungen 41, 42 in Form von Vertiefungen 44 und Bohrungen 45 eingebracht. Die sich in Radialrichtung erstreckenden ersten Ausnehmungen 41 der beiden Scheiben 31 liegen jeweils paarweise einander gegenüber und sind so ausgebildet, dass einander gegenüber liegende erste Ausnehmungen 41 benachbarter Scheiben 31 zusammen einen Kanal bilden. Die ersten Ausnehmungen 41 sind dabei so geformt, dass sich der Kanal bis zum Innendurchmesser des Kurzschlussrings 301 erstreckt. Der aus den ersten Ausnehmungen 41 gebildete Kanal endet gegenüber einer Durchtrittsstelle 13, die sich auf der Mantelfläche 14 der Welle 11 befindet, und ist fluchtend zum Kanal 15 angeordnet, der die Durchtrittsstelle 13 mit dem Hohlraum 12 innerhalb der Welle 11 verbindet. Die sich in Achsrichtung erstreckenden zweiten Ausnehmungen 42 sind als Bohrungen 45 in den Scheiben 31 ausgeführt. Sie verbinden entweder eine sich in Radialrichtung erstreckende erste Ausnehmung 41 mit einem Kanal 23 im Läuferblechpaket 2 oder sie verbinden einen Kanal 24 im Läuferblechpaket 2 mit der Umgebung des Rotors 1. Durch die ersten und zweiten Ausnehmungen 41, 42 wird im Kurzschlussring 301 ein Kanalsystem 4 gebildet, durch welches Fluid vom Hohlraum 12 der Welle 11 in einen oder mehrere Kanäle 23 im Läuferblechpaket 2 geleitet werden kann und Fluid von einem oder mehreren Kanälen 24 im Läuferblechpaket 2 in die Umgebung des Rotors 1 abgeleitet werden kann.

Im Kurzschlussring 302, der in Fig. 1 an der rechten Stirnseite 22 des Läuferblechpakets 2 dargestellt ist, sind in die Scheibe 31, die unmittelbar am Läuferblechpaket 2 anliegt, sich in Radialrichtung erstreckende erste Ausnehmungen 41 in Form von Vertiefungen 44 eingebracht. Diese Ausnehmungen 41 sind dabei so geformt, dass sie einen radial weiter innen liegenden Kanal 23 des Läuferblechpakets 2 mit einem radial weiter außen liegenden Kanal 24 des Läuferblechpakets 2 verbinden. Durch die Gesamtheit der Ausnehmungen 41 wird im Kurzschlussring 302 ein Kanalsystem 4 gebildet, durch welches Fluid, das aus einem radial weiter innen liegenden Kanal 23 des Läuferblechpakets 2 strömt, aufgenommen und einem radial weiter außen liegenden Kanal 24 des Läuferblechpakets 2 zugeführt werden kann.

Die in die Scheiben 31 der Kurzschlussringe 301, 302 eingebrachten ersten und zweiten Ausnehmungen 41, 42 sind so ausgebildet, dass ein Fluid, das durch den Hohlraum 12 der Welle 11 zugeführt und über einen oder mehrere Kanäle 15 an eine oder mehrere Durchtrittsstellen 13 auf der Mantelfläche 14 der Welle 11 tritt, in das Kanalsystem 4 des ersten Kurzschlussrings 301 eintritt und dort einem oder mehreren ersten Kanälen 23 im Läuferblechpaket 2 zugeführt wird. Nachdem das Fluid einen solchen Kanal 23 durchströmt hat, tritt es in das Kanalsystem 4 des zweiten Kurzschlussrings 302 ein, wird dort um 180° umgelenkt und strömt in einem oder mehreren zweiten Kanälen 24 erneut durch das Läuferblechpaket 2. Durch die in den Scheiben 31 des ersten Kurzschlussrings 301 eingebrachten Ausnehmungen 42, 45 verlässt das Fluid den Rotor und strömt in die Umgebung, wo es durch geeignete Vorrichtungen wieder aufgefangen wird.

Fig. 2 zeigt einen Querschnitt eines weiteren Rotors 1. Der in Fig. 2 dargestellte Rotor 1 unterscheidet sich von dem in Fig. 1 dargestellten Rotor 1 lediglich in der Gestaltung des Kanalsystems 4 in dem Kurzschlussring 302, der an der rechten Stirnseite 22 des Läuferblechpakets 2 positioniert ist. In dem in Fig. 2 dargestellten Fall sind in beiden Scheiben 31 des Kurzschlussrings 302 sich in Radialrichtung erstreckende erste Ausnehmungen 41 in Form von Vertiefungen 44 eingebracht. Dabei liegen die Ausnehmungen 41 der beiden Scheiben 31 jeweils paarweise einander gegenüber und sind so ausgebildet, dass sie zusammen einen Kanal bilden. In der Scheibe 31, die unmittelbar am Läuferblechpaket anliegt, sind ferner sich in Achsrichtung erstreckende zweite Ausnehmungen 42 vorhanden, die als Bohrungen 45 ausgeführt sind. Diese Ausnehmungen 42 verbinden die sich in Radialrichtung erstreckenden ersten Ausnehmungen 41 mit den Kanälen 23, 24 im Läuferblechpaket 2. Die Funktion des Kanalsystems 4 im Kurzschlussring 302 an der rechten Stirnseite 22 des Läuferblechpakets 2 in Fig. 2 ist identisch zur Funktion des Kanalsystems 4 im Kurzschlussring 302 an der rechten Stirnseite 22 des Läuferblechpakets 2 in Fig. 1.

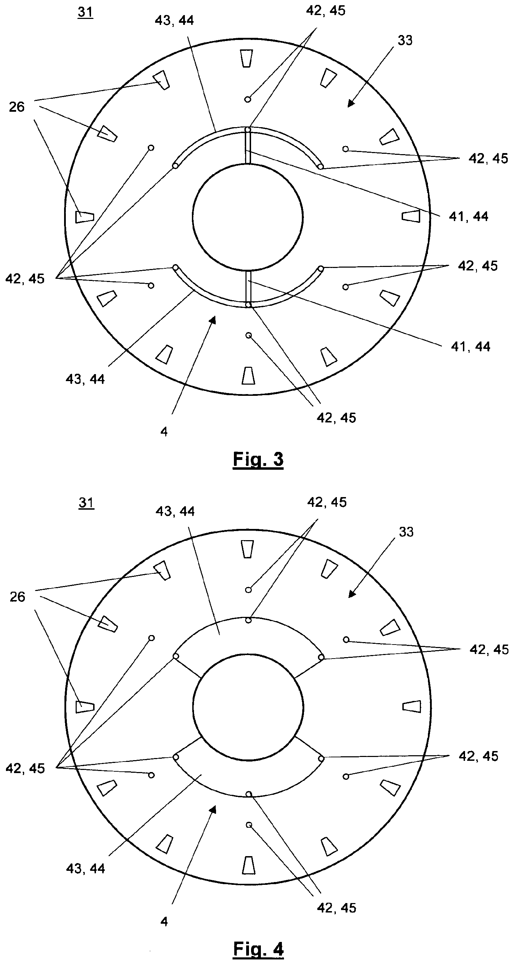

Fig. 3 zeigt eine Draufsicht auf die Oberfläche 33 einer Scheibe 31 eines Kurzschlussrings 301. Die Scheibe 31 hat die Form eines Kreisrings. Die Scheibe 31 weist im Bereich ihres äußeren Rands Aussparungen 26 für die Enden der Läuferstäbe 25 auf. Der Innendurchmesser der Scheibe 31 ist auf den Außendurchmesser der Welle 11 abgestimmt. Vom Innendurchmesser der Scheibe 31 erstrecken sich erste Ausnehmungen 41 in Form von nutartigen Vertiefungen 44 in Radialrichtung nach außen. Jede dieser Ausnehmungen 41 mündet in eine weitere Ausnehmung 43 in Form einer rillenartigen Vertiefung 44, die sich in Umfangsrichtung erstreckt. Ferner weist die Scheibe 31 zweite Ausnehmungen 42 in Form von Bohrungen 45 auf, die sich in Achsrichtung erstrecken. Diese Ausnehmungen 42 sind auf zwei konzentrischen Kreisen unterschiedlichen Durchmessers angeordnet. Über diese Ausnehmungen 42 steht das Kanalsystem 4 mit den Kanälen 23, 24 im Läuferblechpaket in fluidleitender Verbindung.

Fig. 4 zeigt eine Draufsicht auf die Oberfläche 33 einer alternativen Ausführungsform einer Scheibe 31 eines Kurzschlussrings 301. Die Scheibe 31 weist Ausnehmungen 42 in Form von Bohrungen 45 auf, die sich in Achsrichtung erstrecken. Diese Ausnehmungen 42 sind auf zwei konzentrischen Kreisen unterschiedlichen Durchmessers angeordnet. Weitere Ausnehmungen 43, die den Innendurchmesser der Scheibe 31 mit den sich in Achsrichtung erstreckenden und auf dem Inneren der zwei konzentrischen Kreise liegenden, sich in Achsrichtung erstreckenden Ausnehmungen 42 verbinden, sind hier als flächige Vertiefungen 44 ausgeführt. Dies reduziert den Druckabfall des Fluids.

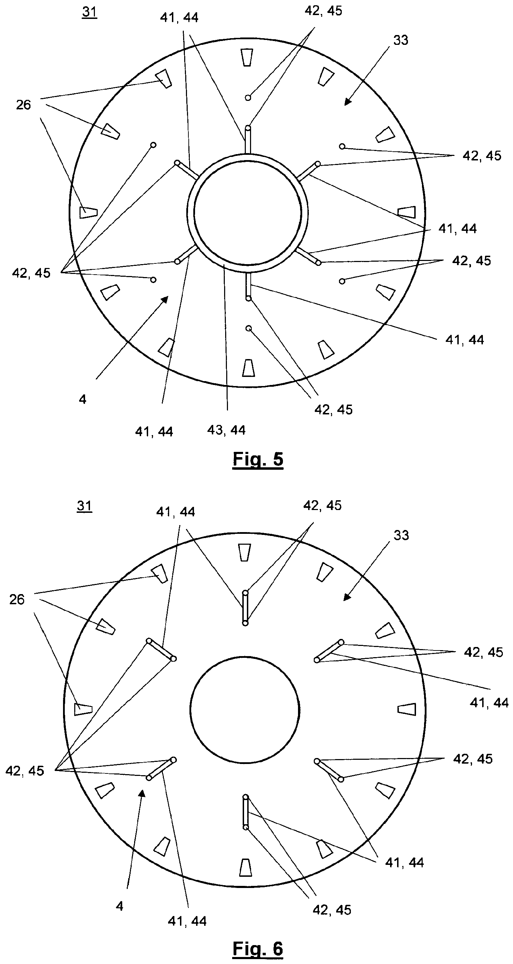

Fig. 5 zeigt eine Draufsicht auf die Oberfläche 33 einer weiteren alternativen Ausführungsform einer Scheibe 31 eines Kurzschlussrings 301. Die Scheibe 31 weist unmittelbar an ihrem Innenumfang eine in Umfangsrichtung umlaufende Ausnehmung 43 in Form einer Vertiefung 44 auf. Durch eine solche Ausnehmung 43 kann Fluid, das nur an einer oder zwei Durchtrittsstellen 13 dem Kurzschlussring 301 zugeführt wird, über den gesamten Umfang verteilt werden. Über Ausnehmungen 41, die sich in Radialrichtung erstrecken, wird das Fluid den Ausnehmungen 42, die sich in Achsrichtung erstrecken, und weiter dann den Kanälen 23 im Läuferblechpaket 2 zugeführt.

Fig. 6 zeigt eine Draufsicht auf die Oberfläche 33 einer Scheibe 31 eines Kurzschlussrings 302. Die Scheibe 31 weist Ausnehmungen 42 in Form von Bohrungen 45 auf, die sich in Achsrichtung erstrecken. Diese Ausnehmungen 42 sind auf zwei konzentrischen Kreisen unterschiedlichen Durchmessers angeordnet. Jeweils zwei dieser Ausnehmungen 42 sind durch weitere Ausnehmungen 41, die sich in Radialrichtung erstrecken, miteinander verbunden. Durch eine derartige Scheibe kann das Fluid, das aus einem ersten Kanal 23 des Läuferblechpakets 2 in den Kurzschlussring strömt, um 180° umgelenkt und einem zweiten Kanal 24 des Läuferblechpakets zugeführt werden.

Die Offenbarung der Erfindung umfasst nicht nur die in den Figuren dargestellten Ausführungsbeispiele der Erfindung, sondern auch zweckmäßige Kombinationen von Merkmalen, die in verschiedenen Figuren enthalten sind. Ferner ist es möglich, die Größe, die Anzahl und die Position der Ausnehmungen in zweckmäßiger Weise zu variieren. Insbesondere kann es vorteilhaft sein, Anzahl und Position der Ausnehmungen so zu wählen, dass die im Läuferblechpaket eingebrachten Kanäle eine spezielle räumliche Zuordnung zu den Läuferstäben aufweisen.

### Bezugszeichenliste

- 1: Rotor
- 11: Welle
- 12: Hohlraum
- 13: Durchtrittsstelle
- 14: Mantelfläche
- 15: Kanal
- 2: Läuferblechpaket
- 21, 22: Stirnseite
- 23, 24: Kanal
- 25: Läuferstab
- 26: Aussparung
- 301, 302: Kurzschlussring
- 31: Scheibe
- 32: Scheibenpaket
- 33: Oberfläche
- 4: Kanalstruktur
- 41, 42, 43: Ausnehmung
- 44: Vertiefung
- 45: Bohrung

- A: Achse

## Patentansprüche

1. Rotor (1) einer elektrischen Asynchronmaschine mit
einer Welle (11), durch die eine Achsrichtung, eine Radialrichtung und eine Umfangrichtung definiert werden, wobei die Welle (11) eine in Radialrichtung außen liegende Mantelfläche (14), einen Hohlraum (12), der sich innerhalb der Welle (11) in Achsrichtung erstreckt, mindestens eine Durchtrittsstelle (13), die sich auf der Mantelfläche (14) der Welle (11) befindet, und mindestens einen Kanal (15) aufweist, der den Hohlraum (12) mit der mindestens einen Durchtrittsstelle (13) verbindet,
einem Läuferblechpaket (2) mit einer ersten Stirnseite (21) und einer in Achsrichtung hierzu entgegengesetzten zweiten Stirnseite (22), wobei das Läuferblechpaket mindestens einen Kanal (23, 24) aufweist, der sich innerhalb des Läuferblechpakets (2) von der ersten Stirnseite (21) zur zweiten Stirnseite (22) erstreckt,
an den Stirnseiten (21, 22) des Läuferblechpakets (2) angebrachten Kurzschlussringen (301, 302), wobei mindestens einer der Kurzschlussringe (301, 302) aus mindestens zwei zu einem Scheibenpaket (32) miteinander verbundenen Scheiben (31) zusammengesetzt ist, wobei jede Scheibe (31) zwei kreisringförmige Oberflächen (33) aufweist und einander zugewandte Oberflächen (33) benachbarter Scheiben (31) sich flächig berühren,
**dadurch gekennzeichnet, dass** mindestens eine Scheibe (31) mindestens eines Kurzschlussrings (301) Ausnehmungen (41, 42, 43) aufweist, die so angeordnet sind, dass in dem Kurzschlussring (301) eine Kanalstruktur (4) gebildet ist, welche in fluidleitender Verbindung mit mindestens einem Kanal (23, 24) des Läuferblechpakets (2) steht und welche die mindestens eine Durchtrittsstelle (13) auf der Mantelfläche (14) der Welle (11) mit mindestens einem Kanal (23, 24) des Läuferblechpakets (2) fluidleitend verbindet.

2. Rotor (1) nach Anspruch 1, **dadurch gekennzeichnet, dass** jeder Kurzschlussring (301, 302) aus mindestens zwei zu einem Scheibenpaket (32) miteinander verbundenen Scheiben (31) zusammengesetzt ist, und dass mindestens eine Scheibe (31) jedes Kurzschlussrings (301, 302) Ausnehmungen (41, 42, 43) aufweist, die so angeordnet sind, dass in den Kurzschlussringen (301, 302) jeweils eine Kanalstruktur (4) gebildet ist, welche in fluidleitender Verbindung mit mindestens einem Kanal (23, 24) des Läuferblechpakets (2) steht.

3. Rotor (1) nach Anspruch 1 oder 2, **dadurch gekennzeichnet, dass** mindestens eine Scheibe (31) eines Kurzschlussrings (301, 302) auf einer ihrer Oberflächen (33) mindestens eine Ausnehmung (41, 43) in Form einer nut- oder rillenartigen Vertiefung (44) aufweist, durch die im Verbund mit einer weiteren Scheibe (31) ein Kanal gebildet ist, der zumindest einen Teil der Kanalstruktur (4) darstellt.

4. Rotor (1) nach Anspruch 3, **dadurch gekennzeichnet, dass** nut- oder rillenartige Vertiefungen (44) benachbarter Scheiben (31) so gebildet sind, dass sie sich zu einem Kanal ergänzen.

5. Rotor (1) nach einem der Ansprüche 1 bis 4, **dadurch gekennzeichnet, dass** die Kanalstruktur (4) mindestens eines Kurzschlussrings (301, 302) mindestens eine erste Ausnehmung (41) umfasst, die sich in Radialrichtung erstreckt, und mindestens eine zweite Ausnehmung (42) umfasst, die sich in Achsrichtung erstreckt.

6. Rotor (1) nach Anspruch 5, **dadurch gekennzeichnet, dass** sich die in Achsrichtung erstreckende, zweite Ausnehmung (42) durch eine Bohrungen (45) in mindestens einer Scheibe (31) eines Kurzschlussrings (301, 302) gebildet ist.

7. Rotor (1) nach Anspruch 5 oder 6, **dadurch gekennzeichnet, dass** die Kanalstruktur (4) mindestens eines Kurzschlussrings (301, 302) mindestens eine dritte Ausnehmungen (43) umfasst, die sich in Umfangsrichtung erstreckt.

8. Rotor (1) nach einem der Ansprüche 3 bis 7, **dadurch gekennzeichnet, dass** erste Ausnehmungen (41) mindestens eines Kurzschlussrings (301, 302) Strömungsquerschnitte aufweisen, die innerhalb des Kurzschlussrings (301, 302) unterschiedlich sind und/oder dass zweite Ausnehmungen (42) mindestens eines Kurzschlussrings (301, 302) Strömungsquerschnitte aufweisen, die innerhalb des Kurzschlussrings (301, 302) unterschiedlich sind und/oder dass dritte Ausnehmungen (43) mindestens eines Kurzschlussrings (301, 302) Strömungsquerschnitte aufweisen, die innerhalb des Kurzschlussrings (301, 302) unterschiedlich sind.

9. Rotor (1) nach einem der Ansprüche 1 bis 2, **dadurch gekennzeichnet, dass** die Kanalstruktur (4) mindestens eines Kurzschlussrings (301, 302) mindestens eine Ausnehmung (41, 43), die als flächige Vertiefung (44) gebildet ist und die sich sowohl in Radialrichtung als auch in Umfangsrichtung erstreckt, und mindestens zweite Ausnehmungen (42) umfasst, die sich in Achsrichtung erstrecken.

10. Rotor (1) nach einem der vorstehenden Ansprüche, **dadurch gekennzeichnet, dass** das Läuferblechpaket (2) mindestens einen ersten Kanal (23) und mindestens einen zweiten Kanal (24) aufweist und dass die Kanalstruktur (4) in einem der Kurzschussringe (302) so ausgebildet ist, dass ein Fluid, welches vom ersten Kanal (23) des Läuferblechpakets (2) in die Kanalstruktur (4) des Kurzschlussrings (302) strömt, dort zumindest bezogen auf die Achsrichtung umgelenkt und in den zweiten Kanal (24) des Läuferblechpakets (2) geführt wird.

11. Verfahren zur Herstellung eines Rotors (1) nach einem der vorstehenden Ansprüche, wobei das Verfahren folgende Schritte umfasst:
a) Bereitstellen mindestens einer Scheibe (31) mit zwei kreisringförmigen Oberflächen (33),
b) Einbringen von Ausnehmungen (41, 42, 43) in mindestens eine der Oberflächen (32) der Scheibe (31) für die Bildung einer Kanalstruktur (4),
c) Montieren der Scheibe (31) zusammen mit mindestens einer weiteren Scheibe (31) zu einem Scheibenpaket (32),
d) Anordnen des Scheibenpakets (32) auf der Welle (11) des Rotors (1) an einer Stirnseite (21, 22) des Läuferblechpakets (2),
e) Herstellen einer Fügeverbindung zwischen benachbarten Scheiben (31) eines Scheibenpakets (32) zur Bildung eines Kurzschlussrings (301, 302).

12. Verfahren nach Anspruch 11, **dadurch gekennzeichnet, dass** das Einbringen der Ausnehmungen (41, 42, 43) in Schritt b) durch Fräsen, Prägen, Stanzen und/oder Bohren erfolgt.
